# EUROPÄISCHE PATENTSCHRIFT

(11) **EP 1 767 301 B1**
(45) Veröffentlichungstag und Bekanntmachung des Hinweises auf die Patenterteilung: **27.05.2009**
(21) Anmeldenummer: 06016993.5
(22) Anmeldetag: 16.08.2006
(51) Int. Cl.: B23H 7/26, B23Q 16/08

(54) **Spannvorrichtung zum Einspannen von Werkstücken**
Clamping device for clamping workpieces
Dispositif de serrage pour serrer des pièces a travailler

(30) Priorität: 21.09.2005 CH 15362005
(43) Veröffentlichungstag der Anmeldung: 28.03.2007
(73) Patentinhaber: F-Tool International AG, 5040 Schoeftland (CH)
(72) Erfinder: Troxler, Ferdinand, 6214 Schenkon (CH)
(74) Vertreter: Rottmann, Maximilian

(56) Entgegenhaltungen:
- DE-C1- 3 618 521
- DE-U1- 8 713 384
- DE-U1- 29 913 924
- US-A- 4 621 821

## Beschreibung

Die vorliegende Erfindung bezieht sich auf eine gemäss dem Oberbegriff des Anspruchs 1 ausgebildete Spannvorrichtung.

Spannvorrichtungen der hier zur Rede stehenden Art dienen dem positionsdefinierten Einspannen von Werkstücken, vorzugsweise im Arbeitsbereich einer Bearbeitungsmaschine, wobei der Begriff Werkstück hier in allgemeiner Form verwendet wird und darunter neben einem konventionellen Werkstück beispielsweise auch ein Werkzeug zu verstehen ist.

Aus der EP-A-0 248 116 ist eine Vorrichtung zum Einspannen von nicht umlaufenden Werkstücken bekannt, welche einen Schaft oder Abschnitt mit polygonalem Querschnitt besitzen. Die Vorrichtung besteht aus einem Spannkörper, der mit einer Spannkammer versehen ist, die im Querschnitt ebenfalls polygonal ausgebildet ist. Diese Spannkammer dient der Aufnahme des genannten Schafts oder Abschnitts des, Werkstücks. Die Spannkammer ist mit drei Referenzflächen versehen, welche der exakten Ausrichtung des Werkstücks in X- und Y-Richtung wie auch bezüglich der Winkellage um die Z-Achse dienen. Zum Fixieren des Werkstücks in der Spannkammer ist eine Klemmschraube vorgesehen, welche an einer Druckphase des genannten Schafts oder Abschnitts anzugreifen bestimmt ist, um diesen gegen die drei Referenzflächen zu drücken. Obwohl eine derartige Vorrichtung durchaus robust und stabil ist und eine hohe Repetiergenauigkeit gewährleistet, ist deren Fertigung sehr aufwendig und mit hohen Kosten verbunden.

Die Erfindung zielt darauf ab, eine gemäss dem Oberbegriff des Anspruchs 1 ausgebildete Spannvorrichtung zum positionsgenauen Einspannen eines Werkstücks derart weiterzubilden, dass sie einfacher und insbesondere kostengünstiger hergestellt werden können, ohne dass darunter die Einspanngenauigkeit des zu fixierenden Werkstücks nennenswert leidet.

Hierzu wird nach der Erfindung eine Spannvorrichtung bereitgestellt, die mit den im Kennzeichen des Anspruch 1 angeführten Merkmalen versehen ist.

Der grundlegende Erfindungsgedanke ist darin zu sehen, dass der Spannkörper aus einem Grundmaterial hergestellt wird, das vergleichsweise günstig ist und einfach bearbeitet werden kann, während die für eine genaue Positionierung in X- und/oder Y-Richtung massgebenden Elemente aus einem vergleichsweise harten Material gefertigt werden.

Vorzugsweise sind die Anschlagstifte rund ausgebildet, womit einerseits herkömmliches Rundmaterial für die Anschlagstifte verwendet werden kann. Andererseits haben runde Anschlagstifte den Vorteil, dass ein mit einer planen Seitenfläche versehenes Werkstück nur entlang einer Linie an den Anschlagstiften zur Anlage kommt, was in Bezug auf die Verschmutzungsunempfindlichkeit der Spannvorrichtung sehr vorteilhaft ist.

Bevorzugte Ausführungsformen und Weiterbildungen des Erfindungsgegenstandes sind in den abhängigen Ansprüchen 2-12 umschrieben.

Nachfolgend wird ein Ausführungsbeispiel der erfindungsgemässen Spannvorrichtung unter Bezugnahme auf die beiliegenden Zeichnungen näher erläutert. In den Zeichnungen zeigt:
- Fig. 1: eine perspektivische Ansicht einer schematisch dargestellten Spannvorrichtung in teilweise geschnittener Darstellung;
- Fig. 2: eine Draufsicht auf die Spannvorrichtung gemäss Fig.1;
- Fig. 3: einen Längsschnitt durch die Spannvorrichtung entlang der Linie A-A in Fig. 2;
- Fig. 4: in perspektivischer Darstellung ein zweites Ausführungsbeispiel einer schematisch dargestellten Spannvorrichtung, und
- Fig. 5: in perspektivischer Darstellung ein drittes Ausführungsbeispiel einer schematisch dargestellten Spannvorrichtung.

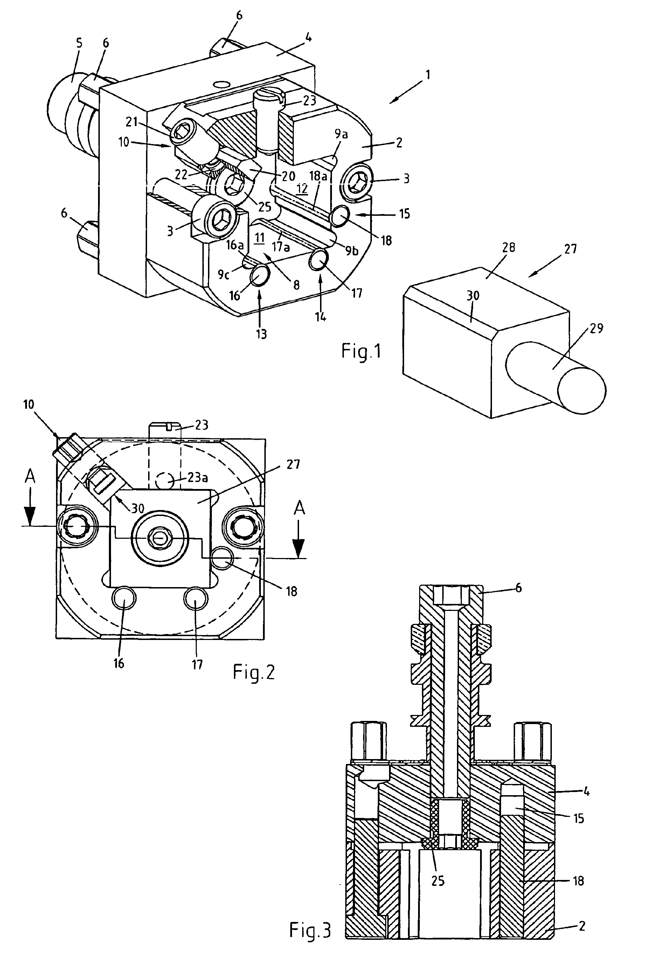

Die Fig. 1 zeigt in einer perspektivischen Ansicht und in teilweise geschnittener Darstellung die Spannvorrichtung 1 zum Einspannen eines hier beispielhaft dargestellten Werkstücks 27, welches beispielsweise eine Elektrode sein kann. Die schematisch dargestellte Spannvorrichtung 1 besteht aus einem Spannkörper 2, der mittels Schrauben 3 an einem Grundkörper 4 fixiert ist. Der Grundkörper 4 ist mit einem Spannzapfen 5 versehen, mittels welchem er an einem Spannfutter (nicht dargestellt) festspannbar ist. Der Grundkörper 4 ist zudem mit Stützfüssen 6 sowie Zentrierelementen (nicht dargestellt) versehen, mittels welchen eine genau Ausrichtung des Grundkörpers 4, und damit auch des Spannkörpers 2, gegenüber einem maschinenseitigen Spannfutter ermöglicht wird. in den Spannkörper 2 ist eine Spannkammer 8 eingelassen, die im Querschnitt polygonal ausgebildet ist. Im vorliegenden Beispiel ist der Querschnitt der Spannkammer 8 im wesentlichen quadratisch ausgebildet. Diese Spannkammer 8 dient der Aufnahme des Werkstücks 27, welches einen Abschnitt oder Schaft 28 aufweist, der einen zu der Spannkammer 8 korrespondierenden polygonalen Querschnitt aufweist. Der Vorderteil des Werkstücks 27 ist mit 29 bezeichnet. Das Werkstück 27 ist mit einer Druckphase 30 versehen, an welcher ein Klemmmechanismus 10 der Spannvorrichtung 1 angreifen kann. Im Bereich von drei Ecken der Spannkammer 8 sind Freistellungen in Form von Ausnehmungen 9a, 9b, 9c in den Spannkörper 2 eingelassen, welche sicherstellen sollen, dass das einzuspannende Werkstück 27 mit den Seitenflächen des Schafts 28 und nicht den Eckbereichen zur Anlage kommt. Im Bereich der vierten Ecke ist der Klemmmechanismus 10 angeordnet, der anschliessend noch näher erläutert wird.

Entlang der einen Innenwand 11 der Spannkammer 8 sind zwei in Z-Richtung verlaufende Bohrungen 13, 14 in den Spannkörper 2 eingelassen, während entlang der benachbarten, dem Klemmmechanismus 10 gegenüberliegenden Innenwand 12 eine weitere, in Z-Richtung verlaufende Bohrung 15 in den Spannkörper 2 eingelassen ist. Die Lage dieser Bohrungen 13, 14, 15 bezieht sich auf einen Referenzpunkt oder ein Referenzsystem, welches im vorliegenden Fall durch die am Grundkörper 4 angeordneten Zentrierelemente bestimmt wird. Diese Bohrungen 13, 14, 15 sind derart in den Spannkörper 2 eingelassen, dass sie entlang eines streifenförmigen Abschnitts mit der Spannkammer 8 in Verbindung stehen. In jede dieser drei Bohrungen 13, 14, 15 ist ein Anschlagstift 16, 17, 18 eingesetzt, der aus einem härteren Grundmaterial gefertigt ist als der Spannkörper 2. Der Spannkörper 2 kann beispielsweise aus Aluminium gefertigt sein, während die Anschlagstifte 16, 17, 18 vorzugsweise aus gehärtetem Stahl bestehen. Derartige Anschlagstifte 16, 17, 18 sind handelsüblich zu kaufen und daher sehr preisgünstig. Die Anschlagstifte 16, 17, 18 sind mittels eines Presssitzes in der jeweiligen Bohrung 13, 14, 15 fixiert. Die in die jeweilige Bohrung 13, 14, 15 eingepressten Anschlagstifte 16, 17, 18 ragen mit einem Bruchteil ihres Durchmessers in die Spannkammer 8. Die Bohrungen 13, 14, 15 wie auch die Anschlagstifte 16, 17, 18 sind vorzugsweise bis in den Grundkörper 4 hinein geführt, wodurch die Lage der Anschlagstifte 16, 17, 18 nicht nur gegenüber dem Spannkörper 2 sondern insbesondere auch gegenüber dem mit Zentrierelementen versehenen Grundkörper 4 genau definiert ist. Im Bereich der vierten Ecke der Spannkammer 8 ist auf der Winkelhalbierenden zwischen den beiden mit Anschlagstiften versehenen Innenwänden 11, 12 der Klemmmechanismus 10 angeordnet. Der Klemmmechanismus 10 ist mit einem Druckteil 20 in Form einer Klemmbacke versehen, welches mittels einer Inbusschraube 21 verschiebbar ist. Die Inbusschraube 21 ist dazu endseitig mit einem drehtellerartigen Ansatz in Form eines T-Stücks 22 versehen, der in einer entsprechenden Ausnehmung des Druckteils 20 drehbar aufgenommen ist. Die Wirkrichtung des Druckteils 20 ist derart gewählt, dass ein in der Spannkammer 8 aufgenommenes Werkstück 27 beim Festziehen der Inbusschraube gegen die drei durch die Anschlagstifte 16, 17, 18 gebildeten Referenzflächen drückt. Es versteht sich, dass anstelle von drei Anschlagstiften 16, 17, 18 beispielsweise auch vier Anschlagstifte vorgesehen werden können, indem in die dem Klemmmechanismus 10 gegenüberliegenden Innenwand 12 zwei Anschlagstifte eingelassen werden.

Da die Anschlagstifte 16, 17, 18 rund sind, wird die Referenzfläche nur durch eine linienförmige Auflagefläche zwischen den Anschlagstiften 16, 17, 18 und den planen Seitenflächen des Schafts 28 des Werkstücks 27 gebildet. Diese linienförmige Auflageflächen sind mittels strichpunktierten Linien 16a, 17a, 18a angedeutet. Sobald sich der Schaft 28 des Werkstücks 27 an den drei Anschlagstiften 16, 17, 18 anlegt, ist das Werkstück 27 in X- und Y-Richtung wie auch bezüglich der Winkellage um die Z-Achse ausgerichtet. Anstelle des gezeigten Klemmmechanismus könnten beispielsweise auch 2 um 90° versetzte Klemmvorrichtungen vorgesehen werden, welche der mit zwei Anschlagstiften 16, 17 versehenen Innenwand 11 bzw. der mit einem Anschlagstift 18 versehenen Innenwand 12 gegenüberliegen.

Der Schaft 28 des Werkstücks 27 ist vorteilhaft mit einer Druckphase 30 versehen, an welcher sich der Druckteil 20 kraft- und ggf. formschlüssig anlegen kann. Durch diese Anschrägung 30 wird auch gleichzeitig die korrekte Lage des Schafts 28 in Bezug auf den Spannkörper 2 festgelegt, indem der Schaft nicht um 90°, 180° oder 270° verdreht in den Spannkörper 2 eingesetzt werden kann.

Am Boden der Spannkammer 8 ist eine als Z-Anschlag dienende Schraube 25 angeordnet. Diese Schraube 25 ist in einer durch den Grundkörper 4 führenden Bohrung fixiert, welche mit einem entsprechenden Innengewinde versehen ist. Zum genauen Festlegen des Z-Anschlags wird der Schraubenkopf nach dem Festziehen der Schraube 25 am Boden der Spannkammer 8 auf die gewünschte Höhe abgeschliffen.

Der Spannkörper 2 ist im weiteren mit einer Kugeldruckschraube 23 versehen, welche dem losen Fixieren eines in der Spannkammer 8 aufgenommenen Werkstücks dient.

Die Fig. 2 zeigt eine Draufsicht auf die Spannvorrichtung gemäss Fig.1, ohne dass diese teilweise geschnitten ist. Aus dieser Darstellung ist insbesondere der Klemmmechanismus 10 ersichtlich, mittels welchem das schematisch angedeutete Werkstück 27 an dessen Druckphase 30 gegen die drei durch die Anschlagstifte 16, 17, 18 gebildeten Referenzflächen gedrückt wird. Das in der Spannkammer 8 aufgenommene Werkstück 27 wird mittels der Kugeldruckschraube 23 gesichert. Die Kugeldruckschraube 23 ist auf der gegenüberliegenden Seite der mit zwei Anschlagstiften 16, 17 versehenen Innenwand 11 angeordnet. Durch die von der Kugeldruckschraube 23 bzw. deren Kugel 23a auf das Werkstück 27 ausgeübte Kraft kann zusätzlich sichergestellt werden, dass das Werkstück 27 gegen die beiden über die Innenwand 11 vorstehenden Anschlagstifte 16, 17 gedrückt wird.

Fig. 3 zeigt einen Längsschnitt durch die Spannvorrichtung entlang der Linie A-A in Fig. 2. Neben dem Spannzapfen 5 ist aus dieser Darstellung insbesondere ersichtlich, dass die zur Aufnahme des jeweiligen Anschlagstifts 18 vorgesehene Bohrung 15 bis in den Grundkörper 4 hinein geführt ist, und dass der entsprechende Anschlagstift 18 sowohl im Spannkörper 2 wie auch im Grundkörper 4 verankert ist. Im weiteren ist die als Z-Anschlag dienende Schraube 25 ersichtlich, welche in ein Innengewinde des Grundkörpers 4 eingeschraubt ist. Indem die Anschlagstifte 16, 17, 18 sowohl im Spannkörper 2 wie auch im Grundkörper 4 fixiert sind, wird einerseits eine genaue Positionierung der Anschlagstifte 16, 17, 18 gegenüber dem Grundkörper 4 erreicht und andererseits wird der relativ weiche Spannkörper 2 auch gegenüber dem Grundkörper 4 positioniert und fixiert.

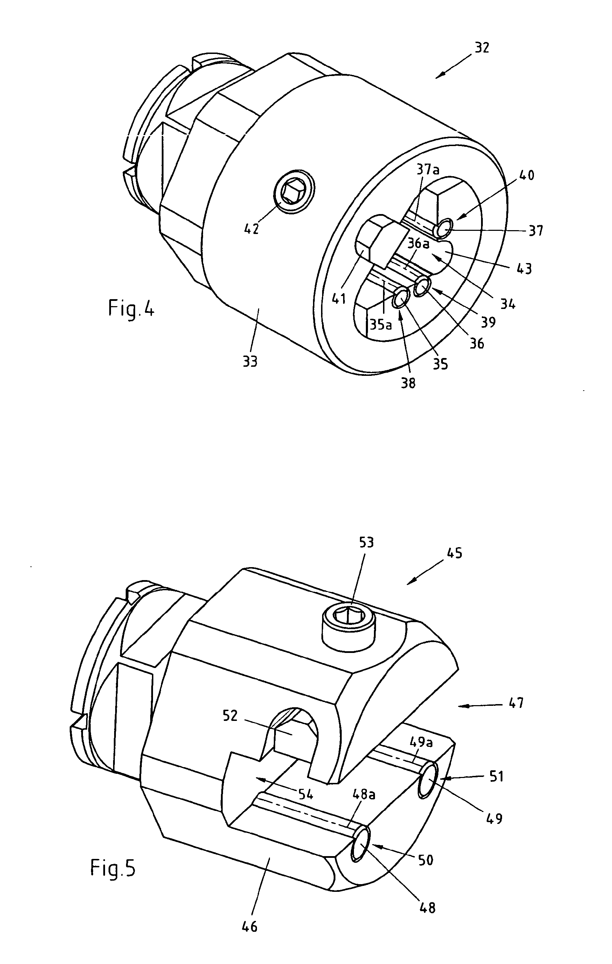

Fig. 4 zeigt in perspektivischer Darstellung ein alternatives Ausführungsbeispiel einer Spannvorrichtung 32. Der Spannkörper 33 ist in diesem Fall mit einer Spannkammer 34 versehen, die, im Querschnitt gesehen, die Form eines rechtwinkligen Dreiecks aufweist. Die Spannkammer 34 eignet sich insbesondere zur Fixierung von Werkstücken mit drei- oder viereckig ausgebildeten Schäften. Entlang der einen Seitenwand sind zwei Anschlagstifte 35, 36 angeordnet, während die angrenzende und unter einem rechten Winkel zur ersten Seitenwand verlaufende weitere Seitenwand mit einem Anschlagstift 37 versehen ist. Zum Festklemmen des Werkstücks bzw. dessen Schaft ist wiederum ein Druckteil 41 in Form einer Klemmbacke vorgesehen, welcher einer zwischen den beiden rechtwinklig aufeinander stehenden Seitenwänden angeordneten Freistellung 43 diametral gegenüberliegt. Der Druckteil 41 ist derart angeordnet, dass ein in der Spannkammer 34 aufgenommener Schaft beim Festziehen des Druckteils 41 gegen die beiden mit den Anschlagstiften 35, 36, 37 versehenen Seitenwände gedrückt wird, so dass die Lage des Werkstücks wiederum in X- und Y-Richtung festgelegt wird. Zum Verschieben des Druckteils 41 ist eine Inbusschraube 42 vorgesehen. Die linienförmigen Auflageflächen 35a, 36a, 37a der Anschlagstifte 35, 36 37 sind wiederum durch strichpunktierte Linien angedeutet.

Fig. 5 zeigt ein weiteres Ausführungsbeispiel einer Spannvorrichtung 45 in perspektivischer Darstellung. Der Spannkörper 46 ist in diesem Fall mit einer Spannkammer 47 in Form eines durchgehenden Längsschlitzes versehen. Die eine, die Spannkammer 47 seitliche begrenzende Wand ist mit zwei Anschlagstiften 48, 49 versehen, während die andere Seitenwand mit einer Klemmbacke 52 versehen ist, welche sich im wesentlichen entlang dieser Seitenwand erstreckt. Der Boden 54 der Spannkammer 47 dient in diesem Fall als Z-Anschlag für das Werkstück bzw. dessen Schaft. Zur Betätigung der Klemmbacke 52 ist wiederum eine Inbusschraube 53 vorgesehen. Die linienförmigen Auflageflächen 48a, 49a der Anschlagstifte 48, 49 sind wiederum angedeutet. Mit einer derartigen Spannvorrichtung 45 sind auch längliche Werkstücke bzw. Schäfte fixierbar, wobei das jeweilige Werkstück durch die beiden Anschlagstifte 48, 49 nur in einer Richtung, namentlich in X- oder Y-Richtung, festgelegt wird.

Anstelle des Ausführungsbeispiels, bei welchem der Spannkörper an einem Grundkörper fixiert ist und der Grundkörper mit Zentrierelementen und einem Spannzapfen versehen ist, könnte der Spannkörper beispielsweise auch auf einer beliebigen Grundplatte oder dgl. montiert werden, welche ihrerseits mit einem definierten Referenzpunkt versehen ist. Ggf. kann es auch genügen, den Spannkörper mit einem oder mehreren Referenzelementen zu versehen, so dass der Spannkörper positionsgenau an einem beliebigen Grundkörper fixiert werden kann. Auch Mehrfachspannvorrichtungen sind denkbar, bei weichen auf einer Grundplatte mehrere Spannkörper montiert werden, sind durchaus möglich.

Indem der Spannkörper 2 aus einem preiswerten, relativ leichten und einfach zu bearbeitenden Grundmaterial gefertigt wird und zur Bildung der Referenzflächen 16a, 17a, 18a mit Anschlagstiften 16, 17, 18 versehen wird, welche aus einem härteren Grundmaterial gefertigt sind als der Spannkörper 2, kann die Spannvorrichtung schnell einfach und kostengünstig hergestellt werden. Durch das Vorsehen von runden Anschlagstiften 16, 17, 18 zur Bildung der Referenzflächen wird eine linienförmige Anlage zwischen dem Werkstück und den Anschlagstiften erreicht, was sich positiv auswirkt im Hinblick auf eine reduzierte Verschmutzungsanfälligkeit. Mit der gezeigten Spannvorrichtung können Werkstücke wie auch Werkzeuge positionsgenau, repetiergenau, lagegerecht und auch referenzorientiert eingespannt werden.

### Bezugszeichenliste :

- 1.: Spannvorrichtung
- 2.: Spannkörper
- 3.: Schrauben
- 4.: Grundkörper
- 5.: Spannzapfen
- 6.: Stützfüsse
- 7.:
- 8.: Spannkammer
- 9.: Ausnehmung / Freistellung
- 10.: Klemmmechanismus
- 11.: Innenwand
- 12.: Innenwand
- 13.: Bohrung
- 14.: Bohrung
- 15.: Bohrung
- 16.: Anschlagstift
- 17.: Anschlagstift
- 18.: Anschlagstift
- 19.:
- 20.: Druckteil
- 21.: Inbusschraube
- 22.: Ansatz (T-förmig)
- 23.: Kugeldruckschraube
- 24.:
- 25.: Z-Anschlag
- 26.:
- 27.: Werkstück / Elektrode
- 28.: Grundkörper
- 29.: Vorderteil
- 30.: Druckphase
- 31.:
- 32.: Spannvorrichtung
- 33.: Spannkörper
- 34.: Spannkammer
- 35.: Anschlagstift
- 36.: Anschlagstift
- 37.: Anschlagstift
- 38.: Bohrung
- 39.: Bohrung
- 40.: Bohrung
- 41.: Druckteil
- 42.: Inbusschraube
- 43.: Freistellung
- 44.:
- 45.: Spannvorrichtung
- 46.: Spannkörper
- 47.: Spannkammer
- 48.: Anschlagstift
- 49.: Anschlagstift
- 50.: Bohrung
- 51.: Bohrung
- 52.: Klemmbacke
- 53.: Inbusschraube
- 54.: Boden (Z-Anschlag)
- 55.:
- 56.:
- 57.:
- 58.:
- 59.:
- 60.:
- 61.:
- 62.:
- 63.:
- 64.:
- 65.:
- 66.:
- 67.:
- 68.:
- 69.:
- 70.:

## Patentansprüche

1. Spannvorrichtung (1, 32, 45) zum positionsgenauen Einspannen eines Werkstücks (27), das zumindest einen Schaft (28) mit polygonalem Querschnitt aufweist, mit einem Spannkörper (2, 33, 46), der eine Spannkammer (8, 34, 47) zur Aufnahme des genannten Schafts (28) aufweist, ferner mit Spannmitteln (10, 41, 52) zum Festspannen des genannten Schafts (28) in der Spannkammer (8, 34, 47) und mit Referenzflächen am Spannkörper (2, 33, 46) zum Festlegen der Lage des Schafts (28) in X- und/oder Y-Richtung, **dadurch gekennzeichnet, dass** der Spannkörper (2, 33, 46) zur Bildung der Referenzflächen (16a, 17a, 18a, 35a, 36a, 37a, 48a, 49a) mit Anschlagstiften (16, 17, 18, 35, 36, 37, 48, 49) versehen ist, welche aus einem härteren Grundmaterial gefertigt sind als der Spannkörper (2, 33, 46).

2. Spannvorrichtung (1, 32, 45) nach Anspruch 1, **dadurch gekennzeichnet, dass** die Anschlagstifte (16, 17, 18, 35, 36, 37, 48, 49) rund ausgebildet sind und der Spannkörper (2, 33, 46) mit an die Spannkammer (8, 34, 47) angrenzenden Bohrungen (13, 14, 15, 38, 39, 40, 50, 51) versehen ist, in welche die Anschlagstifte (16, 17, 18, 35, 36, 37, 48, 49) derart eingesetzt sind, dass sie mit einem Bruchteil ihres Durchmessers in die Spannkammer (8, 34, 47) ragen.

3. Spannvorrichtung (1, 32) nach Anspruch 2, **dadurch gekennzeichnet, dass** die Spannkammer (8, 34) einen polygonalen Querschnitt aufweist und zumindest drei Bohrungen (13, 14, 15, 38, 39, 40) zur Aufnahme der Anschlagstifte (16, 17, 18, 35, 36, 37) in den Spannkörper (2, 33) eingelassen sind, wovon zwei Bohrungen (13, 14, 35, 36) entlang einer ersten Innenwand angeordnet sind, und wobei zumindest eine weitere Bohrung (15, 37) entlang einer zu der ersten Innenwand benachbarten zweiten Innenwand angeordnet ist.

4. Spannvorrichtung (45) nach Anspruch 2, **dadurch gekennzeichnet, dass** die Spannkammer (47) schlitzförmig ausgebildet ist und zwei die Spannkammer (47) seitlich begrenzende Seitenwände aufweist, wobei entlang der einen Seitenwand zumindest zwei Bohrungen (50, 51) zur Aufnahme der Anschlagstifte (48, 49) in den Spannkörper (46) eingelassen sind und wobei die der einen Seitenwand gegenüberliegende weitere Seitenwand zur Aufnahme des Spannmittels (52) zum Festspannen des Schafts des Werkstücks ausgebildet ist.

5. Spannvorrichtung (1, 32, 45) nach Anspruch 2, 3 oder 4, **dadurch gekennzeichnet, dass** die Bohrungen (13, 14, 15, 35, 36, 37, 50, 51) in Z-Richtung verlaufen und parallel zueinander angeordnet sind.

6. Spannvorrichtung (1, 32, 45) nach einem der Ansprüche 2 bis 5, **dadurch gekennzeichnet, dass** die Anschlagstifte (16, 17, 18, 38, 39, 40, 50, 51) mittels eines Presssitzes in der jeweiligen Bohrung (13, 14, 15, 35, 36, 37, 50, 51) fixiert sind.

7. Spannvorrichtung (1, 32, 45) nach einem der Ansprüche 2 bis 6, **dadurch gekennzeichnet, dass** die jeweilige Bohrung (13, 14, 15, 35, 36, 37, 50, 51) entlang eines streifenförmigen, in Z-Richtung verlaufenden Abschnitts mit der Spannkammer (8, 34, 47) in Verbindung steht.

8. Spannvorrichtung (1) nach einem der Ansprüche 2 bis 7, **dadurch gekennzeichnet, dass** der Spannkörper (2) an einem Grundkörper (4) fixiert ist und dass sich die Bohrungen (13, 14, 15) durch den Spannkörper (2) hindurch bis in den Grundkörper (4) hinein erstrecken und dass die Anschlagstifte (16, 17, 18) sowohl im Spannkörper (2) wie auch im Grundkörper (4) fixiert sind.

9. Spannvorrichtung (1) nach Anspruch 8, **dadurch gekennzeichnet, dass** am Grundkörper (4) zumindest ein Fixierelement, insbesondere in der Form eines Spannzapfens (6) zum Festspannen an einem Spannfutter angeordnet ist.

10. Spannvorrichtung (1) nach Anspruch 8 oder 9, **dadurch gekennzeichnet, dass** am Grundkörper (4) Zentrierelemente zum positionsgenauen Ausrichten des Grundkörpers (4) gegenüber einem Spannfutter angeordnet sind.

11. Spannvorrichtung (1, 45) nach einem der vorhergehenden Ansprüche, **dadurch gekennzeichnet, dass** am Boden der Spannkammer (8, 47) eine als Z-Anschlag dienende Referenzfläche (48) oder ein Referenzelement (25) angeordnet ist.

12. Spannvorrichtung (32) nach Anspruch 1 oder 2, **dadurch gekennzeichnet, dass** die Spannkammer (34), im Querschnitt gesehen, im wesentlichen die Form eines rechtwinkligen Dreiecks aufweist.

## Claims

1. A clamping fixture (1, 32, 45) for clamping, precisely positioned, a workpiece (27) comprising at least one shank (28) of polygonal cross-section, featuring a clamping member (2, 33, 46) comprising a clamping chamber (8, 34, 47) for mounting the cited shank (28), further comprising means (10, 41, 52) for clamping the cited shank (28) in the clamping chamber (8, 34, 47), the clamping member (2, 33, 46) comprising datum faces for defining the location of the shank (28) in the X and/or Y direction, **characterized in that** to form the datum faces (16a, 17a, 18a, 35a, 36a, 37a, 48a, 49a) the clamping member (2, 33, 46) is provided with stopper pins (16, 17, 18, 35, 36, 37, 48, 49) made of a base material harder than that of the clamping member (2, 33, 46).

2. The clamping fixture (1, 32, 45) as set forth in claim 1, **characterized in that** the stopper pins (16, 17, 18, 35, 36, 37, 48, 49) are configured round and the clamping member (2, 33, 46) is provided bordering the clamping chamber (8, 34, 47) with drillings (13, 14, 15, 38, 39, 40, 50, 51) into which the stopper pins (16, 17, 18, 35, 36, 37, 48, 49) are inserted such that they protrude by a fraction of their diameter into the clamping chamber (8, 34, 47).

3. The clamping fixture (1, 32) as set forth in claim 2, **characterized in that** the clamping chamber (8, 34) has a polygonal cross-section and that at least three drillings (13, 14, 15, 38, 39, 40) for receiving the stopper pins (16, 17, 18, 35, 36, 37) are drilled in the clamping member (2, 33), two of which drillings (13, 14, 35, 36) are arranged along a first inner wall and at least one further drilling (15, 37) is arranged along a second inner wall bordering the first inner wall.

4. The clamping fixture (45) as set forth in claim 2, **characterized in that** the clamping chamber (47) is configured slotted, comprising two sidewalls bordering the sides of the clamping chamber (47), at least two drillings (50, 51) for receiving the stopper pins (48, 49) being drilled in the base member (46) along the one sidewall and the further sidewall facing a sidewall being configured to mount the means (52) for clamping the shank of the workpiece.

5. The clamping fixture (1, 32, 45) as set forth in any of the claims 2, 3 or 4, **characterized in that** the drillings (13, 14, 15, 35, 36, 37, 50, 51) run in the Z direction and are arranged parallel to each other.

6. The clamping fixture (1, 32, 45) as set forth in any of the claims 2 to 5, **characterized in that** the stopper pins (16, 17, 18, 38, 39, 40, 50, 51) are fixedly located in each drilling (13, 14, 15, 35, 36, 37, 37, 50, 51) by means of a press fit.

7. The clamping fixture (1, 32, 45) as set forth in any of the claims 2 to 6, **characterized in that** each of the drillings (13, 14, 15, 35, 36, 37, 50, 51) communicates with the clamping chamber (8, 34, 47) along a strip-shaped portion running in the Z direction.

8. The clamping fixture (1) as set forth in any of the claims 2 to 7, **characterized in that** the clamping member (2) is fixedly secured to a base member (4) and that the drillings (13, 14, 15) extend through the clamping member (2) up into the base member (4) and that the stopper pins (16, 17, 18) are fixedly secured in both the clamping member (2) and also in the base member (4).

9. The clamping fixture (1) as set forth in claim 8, **characterized in that** arranged on the base member (4) is at least one chucking element, particularly in the form of a chucking spigot (5) for clamping to a chuck.

10. The clamping fixture (1) as set forth in claim 8 or 9, **characterized in that** arranged at the base member (4) are centering elements for locating the base member (4) precisely positioned relative to a chuck.

11. The clamping fixture (1, 45) as set forth in any of the preceding claims, **characterized in that** arranged at the bottom of the clamping chamber (8, 47) is a datum face (48) or datum element (25) serving as a Z stop.

12. The clamping fixture (32) as set forth in claim 1 or 2, **characterized in that** the clamping chamber (34) as viewed cross-sectionally has substantially the shape of a right triangle.

## Revendications

1. Dispositif de serrage (1, 32, 45) pour serrer en position exacte une pièce à travailler (27) qui présente au moins un corps (28) avec une section polygonale, avec un corps de serrage (2, 33, 46) qui présente une chambre de serrage (8, 34, 47) pour la réception du corps (28) cité, de plus avec des moyens de serrage (10, 41, 52) pour le blocage par serrage du corps (28) cité dans la chambre de serrage (8, 34, 47) et avec des surfaces de référence sur le corps de serrage (2, 33, 46) pour la détermination de la position du corps (28) dans le sens X et/ou Y, **caractérisé en ce que** le corps de serrage (2, 33, 46) est pourvu pour la formation des surfaces de référence (16a, 17a, 18a, 35a, 36a, 37a, 48a, 49a) de goupilles de butée (16, 17, 18, 35, 36, 37, 48, 49) qui sont fabriquées en un matériau de base plus dur que le corps de serrage (2, 33, 46).

2. Dispositif de serrage (1, 32, 45) selon la revendication 1, **caractérisé en ce que** les goupilles de butée (16, 17, 18, 35, 36, 37, 48, 49) sont réalisées rondes et le corps de serrage (2, 33, 46) est pourvu de perçages (13, 14, 15, 38, 39, 40, 50, 51) jouxtant la chambre de serrage (8, 34, 47), dans lesquels les goupilles de butée (16, 17, 18, 35, 36, 37, 48, 49) sont insérées de sorte à pénétrer avec une partie de leur diamètre dans la chambre de serrage (8, 34, 47).

3. Dispositif de serrage (1, 32) selon la revendication 2, **caractérisé en ce que** la chambre de serrage (8, 34) présente une section polygonale et au moins trois perçages (13, 14, 15, 38, 39, 40) sont encastrés pour la réception des goupilles de butée (16, 17, 18, 35, 36, 37) dans le corps de serrage (2, 33), dont deux perçages (13, 14, 35, 36) sont disposés le long d'une première paroi intérieure, et dans lequel au moins un autre perçage (15, 37) est disposé le long d'une seconde paroi intérieure contiguë à la première paroi intérieure.

4. Dispositif de serrage (45) selon la revendication 2, **caractérisé en ce que** la chambre de serrage (47) est réalisée en forme de fente et présente deux parois latérales délimitant latéralement la chambre de serrage (47), dans lequel le long d'une paroi latérale, au moins deux perçages (50, 51) sont encastrés pour la réception des goupilles de butée (48, 49) dans le corps de serrage (46) et dans lequel l'autre paroi latérale opposée à la paroi latérale est réalisée pour la réception du moyen de serrage (52) pour le blocage par serrage du corps de la pièce à travailler.

5. Dispositif de serrage (1, 32, 45) selon la revendication 2, 3 ou 4, **caractérisé en ce que** les perçages (13, 14, 15, 35, 36, 37, 50, 51) s'étendent dans le sens Z et sont disposés parallèlement les uns aux autres.

6. Dispositif de serrage (1, 32, 45) selon l'une quelconque des revendications 2 à 5, **caractérisé en ce que** les goupilles de butée (16, 17, 18, 38, 39, 40, 50, 51) sont fixées au moyen d'un ajustement serré dans le perçage (13, 14, 15, 35, 36, 37, 50, 51) respectif.

7. Dispositif de serrage (1, 32, 45) selon l'une quelconque des revendications 2 à 6, **caractérisé en ce que** le perçage (13, 14, 15, 35, 36, 37, 50, 51) respectif est en liaison le long d'une section en forme de bande, s'étendant dans le sens Z avec la chambre de serrage (8, 34, 47).

8. Dispositif de serrage (1) selon l'une quelconque des revendications 2 à 7, **caractérisé en ce que** le corps de serrage (2) est fixé sur un corps de base (4) et **en ce que** les perçages (13, 14, 15) s'étendent au travers du corps de serrage (2) jusque dans le corps de base (4) et **en ce que** les goupilles de butée (16, 17, 18) sont fixées dans le corps de serrage (2) ainsi que dans le corps de base (4).

9. Dispositif de serrage (1) selon la revendication 8, **caractérisé en ce que** sur le corps de base (4) est disposé au moins un élément de fixation, en particulier sous la forme d'un tenon de serrage (6) pour le blocage par serrage sur un mandrin de serrage.

10. Dispositif de serrage (1) selon la revendication 8 ou 9, **caractérisé en ce que** sur le corps de base (4) sont disposés des éléments de centrage pour l'orientation en position précise du corps de base (4) par rapport à un mandrin de serrage.

11. Dispositif de serrage (1, 45) selon l'une quelconque des revendications précédentes, **caractérisé en ce que** sur le fond de la chambre de serrage (8, 47) est disposée une surface de référence (48) servant de butée en Z ou un élément de référence (25).

12. Dispositif de serrage (32) selon la revendication 1 ou 2, **caractérisé en ce que** la chambre de serrage (34), vue en section, présente essentiellement la forme d'un triangle rectangle.
